# EUROPEAN PATENT APPLICATION

(11) **EP 4 328 382 A2**
(43) Date of publication of application: **28.02.2024**
(21) Application number: 24150708.6
(22) Date of filing: 12.02.2015
(51) Int. Cl.: E01B 2/00

(54) **GEOCELL WITH IMPROVED COMPACTION AND DEFORMATION RESISTANCE**

(30) Priority: 12.02.2014 US 201461939198 P
(62) Divisional of application: 15775484.7
(71) Applicant: Geotech Technologies Ltd., 8213502 Tel Aviv (IL)
(72) Inventor: HALAHMI, Izhar, Hod Hasharon (IL); EREZ, Oded, Tel Aviv (IL)
(74) Representative: Kador & Partner Part mbB

(57) **Abstract**

Geocells are disclosed herein that are made from polymeric strips having improved compaction and deformation resistance. The compaction resistance refers to the deformation of the geocell during installation, when the geocell is being infilled. The deformation resistance refers to the deformation of the geocell during service, which is simulated using procedures described herein.

## Description

### CROSS-REFERENCE TO RELATED APPLICATIONS

This application claims priority to U.S. Provisional Patent Application Serial No. 61/939,198, filed February 12, 2014. This application is fully incorporated by reference herein.

### BACKGROUND

The present disclosure refers to geocells which have improved compaction and deformation resistance.

In transport engineering, several layers are recognized in the construction of a pavement. These layers include the subgrade layer, the sub-base layer, the base layer, and the paver or surface layer. The subgrade layer is the native material and acts as the foundation for the pavement. Usually, the soil and loose material on the surface of the ground is dug away or otherwise removed in order to expose the subgrade layer. The sub-base layer is laid over the subgrade, and acts as a load-bearing layer. The sub-base layer spreads load evenly over the subgrade layer, and can also be used to form a level surface. The base layer is laid over the sub-base layer, and is used to carry load. Depending on the desired use of the pavement, another layer can be placed over the base layer, and this layer may be known as a paver base layer. The paver or surface layer is then placed on top of this, and is the exposed layer on the surface of the pavement. The surface layer can be, for example, asphalt (e.g. a road or parking lot) or concrete (e.g. a sidewalk).

Paved roads and railways are very sensitive to plastic deformations in their base and/or sub-base. Strains of 1-3 percent in these two layers can cause cracking in an asphalt surface layer (roads), and can cause distortion of rails (railways).

Geocells have been used for many years in erosion control and soil stabilization on slopes. The geocell acts as a "container" for infill, slowing its erosion, but not increasing its elastic modulus. Geocells are used sometimes for temporary pavements, mostly with sand, but the design life of such temporary pavements is limited to a few months at most.

Long-lasting pavements, such as railways, concrete surfaced and asphalt aggregate surfaced roads, usually fail due to yield of the surface layer, leading to cracking and rutting. A major cause of surface layer yield is poor strength, poor stiffness, and/or poor long-term stability of the base and/or sub-base. This causes deformation at the bottom of the surface layer.

Typically, surface layer failures begin at deformations in the range of 2-4%, in either the base or the sub-base. Prior art geocells have been used for stabilizing the base or sub-base, but have failed to meet this requirement, even in low traffic situations.

There is a need for geocells that are capable of providing sufficient confinement to infill during installation, and later, during service, while limiting plastic (un-recoverable, non-elastic) deformations to a level guaranteeing stability of concrete or asphalt based surface layers or railways. Such geocells need to be able to develop sufficient stiffness to infill during installation, and to retain their dimensional stability for many vehicle passages.

### BRIEF DESCRIPTION

The present disclosure relates to geocells that are suitable for reinforcing and confining infill for road bases or railway bases. Generally speaking, a geocell experiences high transient load during installation, when the geocell is filled with infill and subjected to compaction. A geocell also experiences constant repeated loads during service, when vehicles apply load thereon. The geocells of the present disclosure resist deformation during installation, and/or during service. This property can be tested for as described herein.

Generally, the geocells of the present disclosure have a deformation of at most 3.5% during installation. When visually inspected, no local stress concentrations or plastic yield evidence are visible.

Generally, the geocells of the present disclosure have a deformation of at most 3% during service. Again, when visually inspected, no local stress concentrations or plastic yield evidence are visible.

These and other non-limiting aspects of the disclosure are described in more detail below.

### BRIEF DESCRIPTION OF THE DRAWINGS

The following is a brief description of the drawings, which are presented for the purposes of illustrating the exemplary embodiments disclosed herein and not for the purposes of limiting the same.
**FIG. 1** is a perspective view of a geocell of the present disclosure in its expanded state.
**FIG. 2** is a close-up perspective view of a polymeric strip of the present disclosure used to make the perforated geocell.
**FIG. 3** is a picture of a testing chamber containing two strips cut from a geocell cell wall, installed and clamped.
**FIG. 4** is a picture showing three strips after loading for testing deformation during installation, the left (brown) and center (black) strips being prior art and the right strip (gray) being of the present disclosure.
**FIG. 5** is a picture showing two strips after loading in the middle of testing deformation during service, the right strip (black) being prior art and the left strip (gray) being of the present disclosure.

### DETAILED DESCRIPTION

A more complete understanding of the components, processes and apparatuses disclosed herein can be obtained by reference to the accompanying drawings. These figures are merely schematic representations based on convenience and the ease of demonstrating the present disclosure, and are, therefore, not intended to indicate relative size and dimensions of the devices or components thereof and/or to define or limit the scope of the exemplary embodiments.

Although specific terms are used in the following description for the sake of clarity, these terms are intended to refer only to the particular structure of the embodiments selected for illustration in the drawings, and are not intended to define or limit the scope of the disclosure. In the drawings and the following description below, it is to be understood that like numeric designations refer to components of like function.

The singular forms "a," "an," and "the" include plural referents unless the context clearly dictates otherwise.

Numerical values in the specification and claims of this application should be understood to include numerical values which are the same when reduced to the same number of significant figures and numerical values which differ from the stated value by less than the experimental error of conventional measurement technique of the type described in the present application to determine the value.

All ranges disclosed herein are inclusive of the recited endpoint and independently combinable (for example, the range of "from 2 mm to 10 mm" is inclusive of the endpoints, 2 mm and 10 mm, and all the intermediate values).

A value modified by a term or terms, such as "about" and "substantially," may not be limited to the precise value specified. The modifier "about" should also be considered as disclosing the range defined by the absolute values of the two endpoints. For example, the expression "from about 2 to about 4" also discloses the range "from 2 to 4." The term "about" may refer to plus or minus 10% of the indicated number.

Geocells (also known as cellular confinement systems (CCS)) are a three-dimensional geosynthetic product which are useful in many geotechnical applications such as soil erosion prevention, channel lining, construction of reinforced soil retaining walls, and support of pavements. A CCS is an array of containment cells resembling a "honeycomb" structure that is filled with infill, which can be cohesionless soil, sand, loam, quarry waste, gravel, ballast, or any other type of aggregate. CCSs are used in civil engineering applications to prevent erosion or provide lateral support, such as retaining walls for soil, alternatives for sandbag walls or gravity walls, and for roadway, pavement, and railway foundations. For contrast, geogrids are generally flat (i.e., two-dimensional) and used as planar reinforcement, whereas CCSs are three-dimensional structures with internal force vectors acting within each cell against all the walls. A geocell and a geogrid can also be distinguished by their vertical height. A geocell has a vertical height of at least 20 mm, whereas a geogrid has a vertical height of from about 0.5 mm to 2 mm.

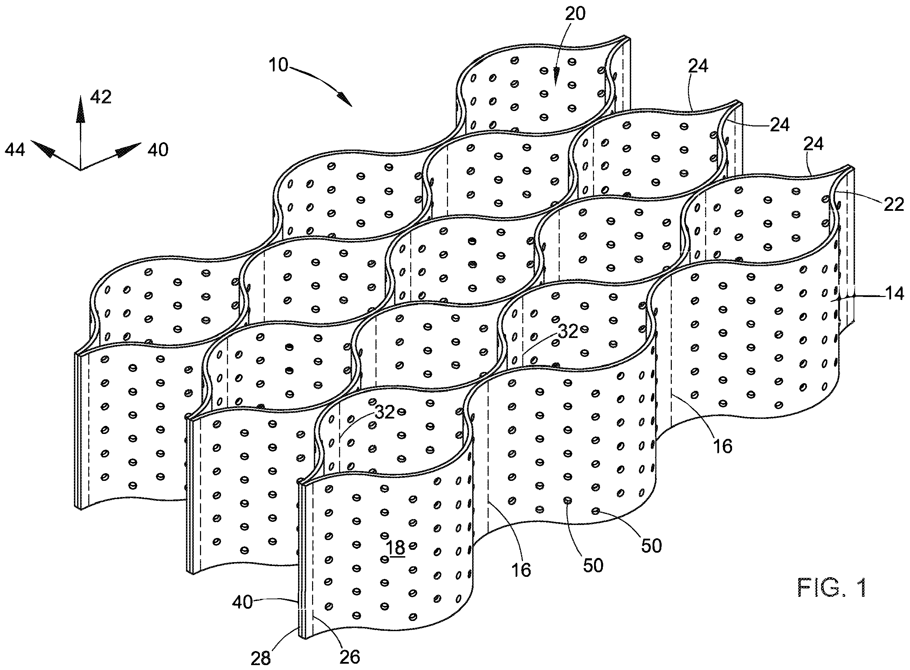

**FIG. 1** is a perspective view of a geocell in its expanded state. The geocell **10** comprises a plurality of polymeric strips **14.** Adjacent strips are bonded together along discrete physical seams **16.** The bonding may be performing by bonding, sewing or welding, but is generally done by welding. The portion of each strip between two seams **16** forms a cell wall **18** of an individual cell **20.** Each cell **20** has cell walls made from two different polymeric strips. The strips **14** are bonded together so that when expanded, a honeycomb pattern is formed from the plurality of strips. For example, outside strip **22** and inside strip **24** are bonded together at seams **16** which are regularly spaced along the length of strips **22** and **24.** A pair of inside strips **24** is bonded together along seams **32.** Each seam **32** is between two seams **16.** As a result, when the plurality of strips **14** is stretched or expanded in a direction perpendicular to the faces of the strips, the strips bend in a sinusoidal manner to form the geocell **10.** At the edge of the geocell where the ends of two polymeric strips **22**, **24** meet, an end weld **26** (also considered a joint) is made a short distance from the end **28** to form a short tail **30** which stabilizes the two polymeric strips **22**, **24.** This geocell may also be referred to as a section, particularly when combined with other geocells over a larger area than could be practically covered by a single section.

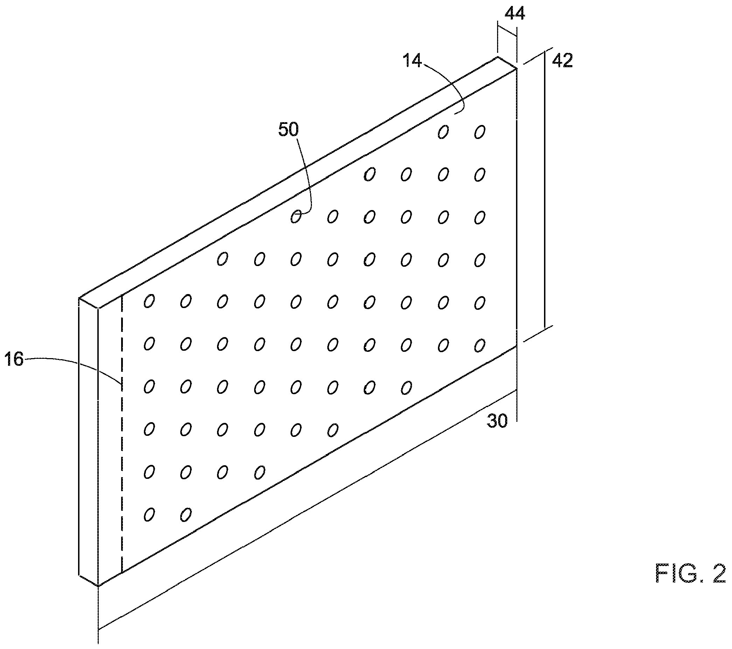

**FIG. 2** is a close-up perspective view of a polymeric strip **14** showing the length **40**, height **42**, and width **44**, with a seam **16** illustrated for reference. The length **40**, height **42**, and width **44** are measured in the direction indicated. The length is measured when the geocell is in its folded or compressed state. In the compressed state, each cell **20** may be considered to have no volume, whereas the expanded state generally refers to when the geocell has been expanded to its maximum possible capacity. In embodiments, the geocell height **43** is from about 50 millimeters (mm) to about 200 mm. The geocell cell size (measured as the distance between seams in the un-folded state) can be from about 200 mm to about 600 mm.

The geocells can be made from polyethylene (PE), medium density polyethylene (MDPE), high density polyethylene (HDPE), polypropylene (PP) and/or blends of polyolefins with a polyamide or a polyester. The term "HDPE" refers hereinafter to a polyethylene characterized by density of greater than 0.940 g/cm³. The term medium density polyethylene (MDPE) refers to a polyethylene characterized by density of greater than 0.925 g/cm³ to 0.940 g/cm³. The term linear low density polyethylene (LLDPE) refers to a polyethylene characterized by density of 0.91 to 0.925 g/cm³. The strips are welded together in an offset manner, with the distance between welded seams being from about 200 mm to about 600 mm.

The usual strip wall thickness for a geocell is 1.27 millimeters (mm), with some variation in the range of 1.0 mm to 1.7 mm. The cell walls can be perforated and/or embossed.

The present geocells have low deformation during installation. A given geocell can be tested for deformation during installation using the following procedure. First, a cell strip is obtained from the geocell. This cell strip is essentially a cell wall that, referring to **FIG. 1**, extends from seam **16** to seam **16** (not seam **32**). The length of this cell strip is the distance between the seams, and the width of this cell strip is equal to the cell height (direction **42** in **FIG. 2**). The cell strip is clamped between an upper clamp and a lower clamp, with the clamps being placed along the seams, so that the length of the cell strip extends between the clamps. The upper clamp is static and is attached to a frame. In contrast, the lower clamp is free and is able to swing. A load can be applied to the lower clamp, and during testing is used to deform the strip. A load of 6.1 kN/meter is then applied to the lower clamp, perpendicular to the seams of the cell strip. This load is applied at ambient temperature (23°C ± 3°) for 90 minutes to simulate deformation during installation (refer as installation strain). After the 90 minutes are complete, the total deformation is measured. The percentage of deformation is obtained by dividing the total deformation by the original cell strip length. The geocells of the present disclosure have an installation strain of at most 3.5%. In a specific embodiment, when improved stability is required, the installation strain is at most 3%. The cell strip should also be free from local plastic yield evidence (when inspected visually).

In this regard, the 6.1 KN/m load is calculated from stresses in typical base design during the compaction phase (when infill is being added and compacted in the geocell). The 90-minute time period simulates the typical period sufficient to achieve stable and predictable interaction between the infill and the geocell (compaction plus confinement).

Some deformation during installation is usually required to ensure sufficient confinement of the infill. However, deformation of greater than about 3.5% during installation causes two undesirable phenomena: (a) irreversible plastic yield in the geocell in perforated areas, making said areas sensitive to premature crazing during service: and (b) insufficient infill confinement, leading to poor base or sub-base stiffness, poor ability to withstand repeating loadings, and unwanted flow of infill downwards and horizontally. Prior art geocells deform significantly higher during this installation step, typically 6% or greater. Moreover, areas of high perforation in prior art geocells, characterized by severe plastic yield, may later fail catastrophically during service. In this regard, it is noted that a cell strip is tested, and for purposes of convenience the performance of the cell strip is attributed to the geocell as well.

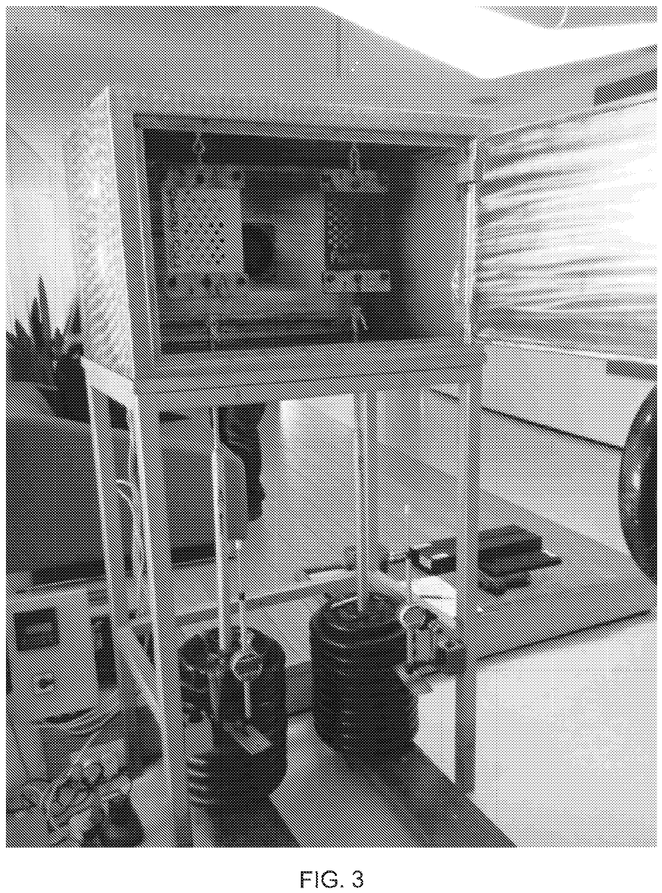

**FIG. 3** is a picture of a chamber that contains two cell strips cut from a geocell, installed and clamped. A load is applied to an arm extending downwards from the lower clamp. An accurate deflectometer is mounted to the chamber frame, with its metering tip touching a plate extending from the load. The deformation can be read on the deflectometer gauge, at specific time slots, during the deformation under load test.

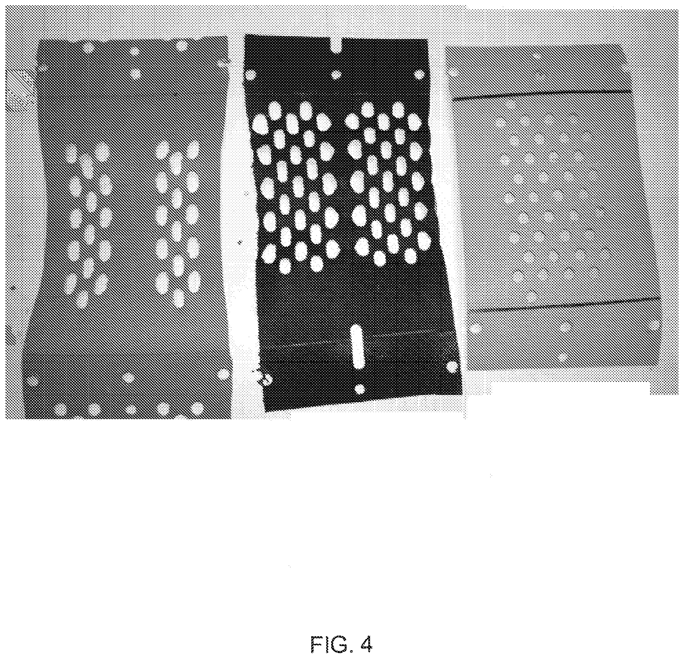

**FIG. 4** is a picture of three different cell strips which have been tested for deformation during installation. The left strip and the center strip are prior art strips. The left strip has a thickness of 1.5 mm and is made of HDPE. The center strip has a thickness of 1.6 mm and is also made of HDPE. Deformation is visually evident and perforations have deformed irreversibly. Clear marks of yield and cold flow near perforations are also observed. These two cell strips have undergone plastic yield and are not recommended for long-term service in bases or sub-bases. This is due to the fact that polymers are known to be subject to crazing (unpredictable catastrophic failure under load) after plastic yielding. This kind of deformation, within only 90 minutes, is unacceptable and these prior art geocells are not suitable for base reinforcement.

The rightmost strip is a cell strip according to the present disclosure, and has a thickness of 1.4 mm. The geocell is made of a low creep blend of HDPE and a polyamide, and the perforation pattern is optimized to avoid local plastic yield. The deformation is much lower, perforations are unchanged, and the strip has not undergone plastic yield. As a result, this strip can be recommended for long-term service in bases or sub-bases.

Desirably, the geocells of the present disclosure are suitable for reinforcing and confining road bases, road sub-bases, industrial floors, pavements over expansive clay, railway bases, or railway sub-bases subjected to heavy and medium traffic. Such geocells have low deformation during service. A given geocell can be tested for deformation during service using the following procedure. First, a cell strip is obtained from the geocell. This strip is essentially a cell wall that, referring to **FIG. 1**, extends from seam **16** to seam **16** (not seam **32**). The length of this strip is the distance between the seams, and the width of this strip is equal to the cell height (direction **42** in **FIG. 2**). The cell strip is clamped between an upper clamp and a lower clamp, with the clamps being placed along the seams, so that the length of the strip extends between the clamps. The upper clamp is static and is attached to a frame. In contrast, the lower clamp is free and is able to swing. The cell strip is usually contained in a chamber which is capable of heating and maintaining its temperature within a range of ± 1°C (i.e. the temperature of the air in the chamber). A load can be applied to the lower clamp, and during testing is used to deform the cell strip. A load of 6.1 kN/meter is then applied to the lower clamp, perpendicular to the seams of the cell strip. This load is applied at ambient temperature (23°C ± 3°) for 90 minutes to allow for deformation of the strip.

After the 90 minutes are complete, the chamber is heated to 44°C. A period of 15 minutes passes to let the strip reach a homogeneous temperature. The deflectometer is reset to zero. The load of 6.1 kN/meter is then applied for 167 minutes at 44°C. The deformation of the cell strip after 167 minutes at 44°C is then measured and recorded. The cell strip can be visually inspected for local plastic yield evidence and local stress concentrations.

Next, the chamber is heated to 51°C. A period of 15 minutes passes to let the cell strip reach a homogeneous temperature. The deflectometer is reset to zero. The load of 6.1 kN/meter is then applied for 167 minutes at 51°C. The deformation of the cell strip after 167 minutes at 51°C is then measured and recorded. The cell strip can be visually inspected for local plastic yield evidence and local stress concentrations.

Next, the chamber is heated to 58°C. A period of 15 minutes passes to let the cell strip reach a homogeneous temperature. The deflectometer is reset to zero. The load of 6.1 kN/meter is then applied for 167 minutes at 58°C. The deformation of the cell strip after 167 minutes at 58°C is then measured and recorded. The cell strip can be visually inspected for local plastic yield evidence and local stress concentrations.

The percentage of deformation is then obtained by dividing the total deformation by the original strip length. As described above, the total deformation is obtained by summing the deformation of the cell strip at 44°C, the deformation of the cell strip at 51°C, and the deformation of the cell strip at 58°C. The accumulated strain is referred as service strain. The geocells of the present disclosure have a service strain of at most 3%. The cell strip should also be free from local plastic yield evidence (when inspected visually). In specific embodiments, when improved stability is required, the cell strip has a service strain of at most 2.5%.

It should be noted that the temperatures of 44°C, 51°C, and 58°C refer to the temperature to which the chamber is heated, i.e. the air in the chamber. Generally, the strip reaches equilibrium with the chamber temperature within about 15 minutes from the start of the cycle.

This procedure is modified from ASTM D6992, and is supported by a method known as Stepped Isothermal Method (SIM). The number and duration of steps is calculated to simulate traffic passages typical to medium and medium-heavy traffic.

As described above, the load is not removed during equilibration to the new higher temperature.

Also as described above, the deflectometer is reset as the chamber is set to the new higher temperature. In some embodiments, the deflectometer is not reset, and the total deformation is the deformation measured after the heating at 58°C.

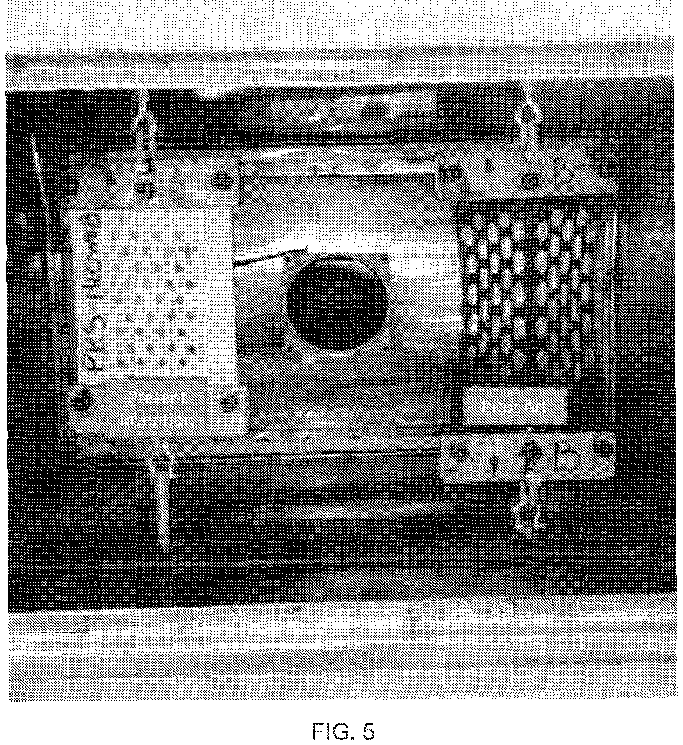

**FIG. 5** is a picture showing two cell strips during the 44°C heating step, which represents a time of about 10% of the service life. The right strip is a prior art strip, and has severe plastic deformation. At this stage, the deformation is more than 25%. The left strip is a cell strip of the present disclosure, and has deformed less than 0.2%, and has not exhibited visual evidence of distortions. This behavior was retained until the end of the test, and the total deformation for the left strip was 1.4% of the original distance between clamps. No visual evidence of distortions was seen in the left strip.

The present disclosure has been described with reference to exemplary embodiments. Obviously, modifications and alterations will occur to others upon reading and understanding the preceding detailed description. It is intended that the present disclosure be construed as including all such modifications and alterations insofar as they come within the scope of the appended clauses or the equivalents thereof.
In the following clauses, preferred embodiments of the invention are described:
1. A geocell formed from a plurality of polymeric strips, adjacent strips being bonded together along seams to form a plurality of cells having cell walls when stretched in a direction perpendicular to the faces of the strips;
   wherein a cell strip of the geocell is characterized by an installation strain of at most 3.5%.
2. The geocell of clause 1, wherein the cell strip of the geocell is characterized by an installation strain of at most 3.0%.
3. The geocell of clause 1, wherein the cell strip of the geocell is characterized by an installation strain of at most 2.5%.
4. A geocell formed from a plurality of polymeric strips, adjacent strips being bonded together along seams to form a plurality of cells having cell walls when stretched in a direction perpendicular to the faces of the strips;
   wherein a cell strip of the geocell has a service strain of at most 3.0%.
5. The geocell of clause 4, wherein the cell strip of the geocell has a service strain of at most 2.5%.
6. The geocell of clause 4, wherein the service strain is measured according to the following procedure:
   obtaining the cell strip which is cut from one seam of a cell wall to the other seam of the cell wall, with the cell strip length being the distance between the seams, and the cell strip width being equal to the cell height;
   clamping the cell strip between an upper clamp and a lower clamp, wherein the upper clamp is static and attached to a frame, the lower clamp is free and can be loaded with a weight, and the clamps are located within a chamber that permits temperature regulation;
   applying a load of 6.1 kN/meter to the lower clamp and perpendicular to the seams of the cell strip for 90 minutes at ambient temperature;
   heating the chamber to 44°C and waiting for 15 minutes to allow the cell strip to reach a homogeneous temperature;
   applying the load of 6.1 kN/meter to the lower clamp and perpendicular to the seams of the cell strip for 167 minutes at 44°C;
   measuring the deformation of the cell strip at 44°C;
   heating the chamber to 51°C and waiting for 15 minutes to allow the cell strip to reach a homogeneous temperature;
   applying the load of 6.1 kN/meter to the lower clamp and perpendicular to the seams of the cell strip for 167 minutes at 51°C;
   measuring the deformation of the cell strip at 51°C;
   heating the chamber to 58°C and waiting for 15 minutes to allow the cell strip to reach a homogeneous temperature;
   applying the load of 6.1 kN/meter to the lower clamp and perpendicular to the seams of the cell strip for 167 minutes at 58°C; and
   measuring the deformation of the cell strip at 58°C; and
   dividing the total deformation of the cell strip by the original distance between the upper and lower clamps to obtain the service strain.
7. The geocell of clause 6, wherein the load of 6.1 kN/meter is removed from the lower clamp when the chamber is heated to 44°C, when the chamber is heated to 51°C, and when the chamber is heated to 51°C.
8. The geocell of clause 6, wherein the load of 6.1 kN/meter is not removed from the lower clamp when the chamber is heated to 44°C, when the chamber is heated to 51°C, or when the chamber is heated to 51°C.
9. The geocell of clause 6, wherein the service strain is the value obtained after measuring the deformation of the cell strip at 58°C.
10. The geocell of clause 6, wherein the service strain is measured using a deflectometer;
   wherein the deflectometer is reset to zero prior to applying the load of 6.1 kN/meter for 167 minutes at 44°C;
   wherein the deflectometer is reset to zero prior to applying the load of 6.1 kN/meter for 167 minutes at 51°C; and
   wherein the deflectometer is reset to zero prior to applying the load of 6.1 kN/meter for 167 minutes at 58°C; and
   wherein the total deformation is obtained by summing the deformations of the strip at 44°C, 51°C, and 58°C.

## Claims

1. A geocell (10) formed from a plurality of polymeric strips (14), adjacent strips (22, 24) being bonded together along seams (16) to form a plurality of cells (20) having cell walls (18) when stretched in a direction perpendicular to the faces of the strips, wherein the cell walls (18) are perforated, the geocell (10) being **characterized in that** it has a service strain of at most 3.0%,
wherein the perforated polymeric strips have a wall thickness of 1.0 mm to 1.7 mm, and
wherein the perforated polymer strips are made from a blend of (i) a polyolefin with (ii) a polyamide or a polyester.

2. The geocell of claim 1, wherein the geocell (10) is **characterized by** a service strain of at most 2.5%.

3. The geocell of claim 1, wherein the geocell (10) has an installation strain of at most 3.5%.

4. The geocell of claim 1, wherein the geocell (10) has an installation strain of at most 3.0%.

5. The geocell of claim 1, wherein the geocell (10) has an installation strain of at most 2.5%.

6. The geocell of claim 1, wherein the geocell (10) has a geocell height (42) of about 50 millimeters to about 200 millimeters.

7. The geocell of claim 1, wherein the geocell (10) has a geocell size (40) of about 200 millimeters to about 600 millimeters.

8. The geocell of claim 1, wherein the distance between seams is from about 200 millimeters to about 600 millimeters.
